(19) Europäisches Patentamt
European Patent Office
Office européen des brevets

(11) **EP 1 963 407 B1**

(12) **EUROPEAN PATENT SPECIFICATION**

(45) Date of publication and mention
of the grant of the patent:
**10.11.2010 Bulletin 2010/45**

(51) Int Cl.:
*C08J 5/18* (2006.01)        *C08L 23/16* (2006.01)
*C08L 23/10* (2006.01)      *C08L 21/00* (2006.01)
*C08L 23/04* (2006.01)

(21) Application number: **06841117.2**

(22) Date of filing: **22.12.2006**

(86) International application number:
**PCT/EP2006/012432**

(87) International publication number:
**WO 2007/071430 (28.06.2007 Gazette 2007/26)**

(54) **FILMS COMPRISING DYNAMICALLY VULCANISED THERMOPLASTIC ELASTOMERS**

FOLIEN, UMFASSEND DYNAMISCH VULKANISIERTE THERMOPLASTISCHE ELASTOMERE

FILMS COMPRENANT DES ÉLASTOMÈRES THERMOPLASTIQUES DYNAMIQUEMENT VULCANISÉS

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.12.2005 EP 05028397
26.06.2006 EP 06013083**

(43) Date of publication of application:
**03.09.2008 Bulletin 2008/36**

(73) Proprietor: **DSM IP Assets B.V.
6411 TE Heerlen (NL)**

(72) Inventor: **WILLEMS, Edwin
NL-6136 BV Sittard (NL)**

(74) Representative: **van der Ploeg, Antonius Franciscus M.J.
DSM Intellectual Property,
P.O. Box 9
6160 MA Geleen (NL)**

(56) References cited:
**EP-A- 1 433 812        WO-A-01/12717
WO-A-02/18487        WO-A-02/051634
WO-A-03/048252        WO-A-2005/023909**

**Description**

The present invention relates to a film comprising a vulcanised thermoplastic elastomer. The present invention also relates to the use of a film comprising a vulcanised thermoplastic elastomer in medical or hygienic applications.

Films comprising vulcanised thermoplastic elastomers are known from for example WO-A-2005/023909. This patent application discloses films comprising a vulcanised thermoplastic elastomer and ethylene/alpha-olefin copolymers. One of the disadvantages of these films is the elastic behaviour. In applications as diapers or adult incontinence products a better elastic behaviour is required. A further disadvantage of these films for example in medical applications is the temperature resistance, which is unsatisfactory in case of sterilisation at increased temperatures. The prior art in fact shows that it is difficult to achieve films comprising vulcanised thermoplastic elastomers with a good performance.

The object of the present invention is to provide a film comprising a vulcanised thermoplastic elastomer with improved performance.

This object is achieved by a film comprising a vulcanised thermoplastic elastomer and a polypropylene based polyolefine composition.

Surprisingly, it has been found that a film comprising a vulcanised thermoplastic elastomer and a polypropylene based polyolefine composition shows an improved elastic behaviour. The films show a decreased permanent deformation after stretching.

A further advantage of the film according to the present invention is that it shows a better temperature resistance if exposed to temperatures higher than 90°C which is often required in medical applications for example by sterilisation. A further advantage of the film according to the present invention is that it shows a very smooth and silky surface, so that the films are very well suited for medical or hygienic applications.

The vulcanised thermoplastic elastomer in the film according to the present invention for example comprises a thermoplastic and a rubber. Examples of thermoplastics are polyolefins, polyamide or polycarbonate. The vulcanised thermoplastic elastomer preferably comprises a polyolefin based thermoplastic elastomer comprising a polyolefin and a rubber. Examples of the polyolefin are homopolymers of ethylene or propylene, copolymers of ethylene and propylene, copolymers of ethylene and an alpha-olefin comonomer with 4-20 carbon atoms or copolymers of propylene and an alpha-olefin comonomer with 4-20 carbon atoms. In case of a copolymer, the content of propylene in said copolymer is preferably at least 75 wt.%. The polyolefin homo- and copolymers may be prepared with a Ziegler-Natta catalyst, a metallocene catalyst or with another single site catalyst. Preferably, polypropylene, polyethylene or mixtures thereof are used as polyolefin. More preferably polypropylene is used as polyolefin. The polypropylene may be linear or branched. Preferably a linear polypropylene is used. The Melt flow index (MFI) of the polypropylene preferably is between 0.1 and 100; more preferably between 0.1 and 50; even more preferably 0,3-20 (according to ISO standard 1133 (230°C; 2.16 kg load)).

The amount of polyolefin is for example less than 20% by weight relative to the total weight the thermoplastic elastomer. Preferably the amount of polyolefin is between 1-15% by weight, more preferably between 5-10% by weight relative to the total weight the vulcanised thermoplastic elastomer.

Examples of rubbers that are suitable in the polyolefin based thermoplastic elastomer according to the present invention are ethylene-propylene copolymers, hereinafter called EPM, ethylene-propylene-diene terpolymers, hereinafter called EPDM, styrene-butadiene-styrene rubber (SBS), nitrile butadiene rubber, isobutene-isoprene rubber, styrene-ethylene-butylene-styrene block copolymers (SEBS), butyl rubber, isobutylene-p-methylstyrene copolymers or brominated isobutylene-p-methylstyrene copolymers, natural rubber or blends of these.

Preferably, EPDM or EPM is used as rubber. Most preferably, EPDM is used as rubber. The EPDM preferably contains 40-80 parts by weight ethylene monomer units, 58-18 parts by weight monomer units originating from an alpha-olefin and 2-12 parts by weight monomer units originating from a non-conjugated diene whereby the total weight of the ethylene monomer units, the alpha-olefin and the non-conjugated diene is 100. As alpha-olefin use is preferably made of propylene. As non-conjugated diene use is preferably made of dicyclopentadiene (DCPD), 5-ethylidene-2-norbornene (ENB) or vinylnorbornene (VNB) or mixtures thereof.

The rubber in the vulcanised thermoplastic elastomer is dynamically vulcanised in the presence of a curing agent such as, for example sulfur, sulfurous compounds, metal oxides, maleimides, phenol resins or peroxides. These curing agents are known from the state of the art and are described in for example US-A-5100947. It is also possible to use siloxane compounds as curing agent, examples of siloxane compounds are hydrosilane or vinylalkoxysilane. The rubber in the film according to the present invention is preferably vulcanised with peroxides as curing agent. Examples of suitable peroxides are organic peroxides for example dicumyl peroxide, di-tert-butylperoxide, 2,5-dimethyl-(2,5-di-tert-butylperoxy)hexane, 1,3-bis(tert-butylperoxyisopropyl)benzene, 1,1-bis(tert-butylperoxy)-2,3,5-trimethylcyclohexane, benzoyl peroxide, 2,4-dichlorobenzoyl peroxide, tert-butyl peroxybenzoate, tert-butyl peroxyisopropylcarbonate, diacetyl peroxide, lauroyl peroxide, tert-butyl cumyl peroxide.

The amount of peroxide is preferably between 0,02-5% by weight and more preferably between 0,05-2% by weight relative to the total weight of the thermoplastic elastomer. A co-agent may also be used during vulcanization of the elastomer. Examples of suitable co-agents are divinyl benzene, sulphur, p-quinondioxime, nitrobenzene, diphenylguanidine, triarylcyanurate, trimethylolpropane-N,N-m-phenylenedimaleimide, ethyleneglycol dimethacrylate, polyethylene dimethacrylate, trimethylolpropane trimethacrylate, arylmethacrylate, vinylbutylate and vinylstearate. The amount of co-agent is preferably between 0-2.00% by weight of the total weight of the thermoplastic elastomer composition. Films prepared from peroxide vulcanised thermoplastic elastomers show a good transparency.

The degree of vulcanization of the rubber can be expressed in terms of a gel content. Gel content is the ratio of the amount of non-soluble rubber and the total amount of rubber (in weight) of a specimen soaked in an organic solvent for the rubber. A method for measuring the gel content is described in US-A-5100947. Herein a specimen is soaked for 48 hours in an organic solvent for the rubber at room temperature. After weighing of both the specimen before soaking and its residue, the amount of non-soluble elastomer and total elastomer can be calculated, based on knowledge of the relative amounts of all components in the thermoplastic elastomer composition. The rubber in the dynamically vulcanised polyolefin based thermoplastic elastomer according to the present invention is at least partly vulcanised and for instance has a gel content between 60 and 100%.

Preferably the rubber is vulcanised to a gel content higher than 70%. More preferably to a gel content higher than 90%. Even more preferably the rubber is vulcanised to a gel content of at least 95%.

The dynamically vulcanised thermoplastic elastomer can be prepared by melt mixing and kneading the polyolefin, the rubber and optionally additives customarily employed by one skilled in the art. Melt mixing and kneading may be carried out in conventional mixing equipment for example roll mills, Banbury mixers, Brabender mixers, continuous mixers for example a single screw extruder, a twin screw extruder. Preferably, melt mixing is carried out in a twin-screw extruder. After the polyolefin, the rubber and optionally additives have been properly dispersed; the vulcanization agent is added to initiate the dynamic vulcanization. The dynamically vulcanised thermoplastic elastomer in the film of the present invention may also be prepared by melt mixing the polyolefin, the rubber and optionally additives in one step. By one step is meant that the polyolefin, the rubber, the curing agent and optionally other additives are fed by feeders to a continuous mixer at the same time. The polyolefin may however also be added partly before and partially after the vulcanization. An oil may for example be added before, during or after the vulcanization. The oil may however also be added partly before and partially after the vulcanization. Preferably the oil is added after the vulcanisation.

The vulcanised thermoplastic elastomer for example has hardness below 80 shore A. Preferably the dynamically vulcanised thermoplastic elastomer has a hardness below 70 shore A. More preferably the dynamically vulcanised thermoplastic elastomer has a hardness below 60 shore A.

The polypropylene based polyolefin composition for example comprises from 20 to 50 parts by weight of polypropylene and 50 to 80 parts by weight of an elastomeric olefinic copolymer whereby the total parts by weight is 100. More preferably, the polypropylene based polyolefin compositions comprises between 20 and 40 parts by weight of polypropylene and between 60 and 80 parts by weight of an elastomeric olefinic copolymer whereby the total parts by weight is 100. Most preferably, between 30 and 40 parts of a polypropylene and between 60 and 70 parts of an elastomeric olefinic copolymer whereby the total parts by weight is 100.

Preferably the polypropylene based polyolefin composition comprises 20 to 50 parts by weight of a polypropylene and from 50 to 80 parts by weight of an elastomeric olefinic copolymer with olefins $CH_2$ =CHR, in which R is H or an alkyl having 2-10 carbon atoms, and, if appropriate, containing minor proportions of units derived from a polyene.

The polypropylene is preferably selected from polypropylene homopolymer or propylene copolymer containing 0.5 to 15 mol % of ethylene and/or an alpha-olefin having 4 to 10 carbon atoms. The polypropylene for example has a molecular weight distribution (MWD) greater than 3.5.

The polypropylene homopolymer preferably has an isotactic index, determined by measurement of the solubility in xylene, greater than 85 and more preferably greater than 90. It is preferable for the propylene polymer to have an MWD greater than 5 and generally between 5 and 50. The melt index (ASTM 1238 condition "L") of the propylene polymer is generally between 0.1 and 50 g/10 minutes. Preferably the melt index is between 0.1 and 30. The propylene copolymer for example comprises from 2 to 10 mol % of an alpha-olefin other than propylene. Preferably, the alpha-olefin is selected from the group comprising ethylene, 1-butene, 1-hexene, 1-octene and 4-methyl-1-pentene. Among these, ethylene and 1-butene are particularly preferred.

The polypropylene based polyolefins of the present invention can be prepared according to known technologies by polymerization of propylene, if appropriate in the presence of ethylene or other alpha-olefins, in the presence of conventional catalysts of the Ziegler/Natta type comprising the product of the reaction between an aluminium alkyl and a solid component comprising a transition metal supported on $MgCl_2$ in an active form. Suitable methods for preparing the propylene polymers are described, for example, in EP-A-395083, EP-A-553805 and EP-A-553806.

The propylene polymers can also be prepared using for example a single-site or metallocene catalyst system.

The elastomeric olefinic copolymer is preferably selected from the copolymers of ethylene with alpha.-olefins $CH_2$ =CHR in which R is alkyl having 1 to 6 carbon atoms. More preferably, the alpha.-olefin is propylene or butylene. In said copolymer, the content by weight of units derived from ethylene is preferably between 40 and 70%, more preferably between 50 and 70% most preferable between 60 and 70%. The content by weight of units derived from alpha.-olefins is preferably between 30 and 60%, more preferably between 30 and 50%, most preferably between 30 and 40%. Particularly preferred are the copolymers, which contain 0.1 to 20% by weight, preferably 1 to 10%, of units derived from a polyene. Such a polyene can be selected from the group comprising trans-1,4-hexadiene, cis-1,4-hexadiene, 6-methyl-1,5-heptadiene, 3,7-dimethyl-1,6-octadiene and 11-methyl-1,10-dodecadiene; monocyclic diolefins such as, for example, cis-1,5-cyclooctadiene and 5-methyl-1,5-cyclooctadiene; bicyclic diolefins such as, for example, 4,5,8,9-tetrahydroindene and 6- and/or 7-methyl-4,5,8,9-tetrahydroindene; alkenyl- or alkylidene-norbornenes such as, for example, 5-ethylidene-2-norbornene, 5-isopropylidene-2-norbornene and exo-5-isopropenyl-2-norbornene; polycyclic diolefins such as, for example, dicyclopentadiene, tricyclo[6.2.1.0$^2$,7]4,9-undecadiene and the 4-methyl derivative thereof, 1,4-hexadiene, isoprene, 1,3-butadiene, 1,5-hexadiene, 1,6-heptadiene and so on. Among these, 5-ethylidene-2-norbornene is particularly preferred. The elastomeric ethylene copolymer preferably has a low crystallinity. Preferably, the elastomeric ethylene copolymer used in the present invention has an MWD of lower than 3, generally of between 2 and 3.

The elastomer olefin copolymer can advantageously be prepared by polymerising mixtures of ethylene, alpha-olefin and, if appropriate, polyene in the presence of a catalytic system comprising a metallocene compound and an alumoxane.

The polypropylene based polyolefin compositions can be prepared by using known methodologies such as mechanical mixing of the two components by means of internal mixers of the Banbury type, having a high homogenizing power. Alternatively, the said compositions can advantageously be obtained directly in the reactor by means of sequential polymerisation. The compositions obtained according to this technique in fact show better elastomeric properties than those of the compositions obtained by simple mechanical mixing. The above-mentioned polypropylene based polyolefin compositions (b) are preferably prepared by the process described in WO-A-9635751. These polyolefine compositions, also known as reactor TPO's, are commercially available for example under the trade name Hifax®, Adflex® and Softell®.

The polypropylene based polyolefin may also be a random propylene copolymers comprising from 75 to 95 percent by weight repeat units from propylene and from 5 to 25 percent by weight of repeat units from a linear or branched alpha-olefin other than propylene having 2 or from 4 to 20 carbon atoms. The random propylene copolymers preferably have a narrow molecular weight distribution (MWD) for example between 1.5 and 5.0, with a preferred MWD between 1.5 and 3.2. The random propylene copolymers preferably comprise isotactically propylene units. The crystallinity of the random propylene copolymers is measured by the heat of fusion (DSC), preferably from 2 to 65 % of homoisotactic polypropylene, preferably between 5 to 40 %. The random propylene copolymers preferably comprise from 80 to 94 percent by weight repeat units from propylene and from 6 to 20 percent by weight of an alpha-olefin and more preferably, from 84-90 percent by weight repeat units from propylene and from 10 to 16 by weight of said alpha-olefin. Preferably said alpha-olefin is ethylene. There is no particular limitation on the method for preparing the random propylene copolymers. The random propylene copolymers may be prepared by copolymerising propylene and the alpha-olefin having 2 or from 4 to 20 carbon atoms, preferably ethylene, in a single stage or multiple stage reactor. Polymerisation methods include high pressure, slurry, gas, bulk, or solution phase, or a combination thereof, using a traditional Ziegler-Natta catalyst or a single-site, metallocene catalyst system. The catalyst used is preferably one, which has a high isospecificity. Preferably a metallocene catalyst system is used. The polymerisation may be carried out by a continuous or batch process and may include use of chain transfer agents, scavengers, or other such additives as deemed applicable. The above-mentioned random propylene copolymers are preferably prepared by the process described in EP-A-969043. These random propylene copolymers are commercially available for example under the trade name Vistamaxx®.

The polypropylene based polyolefin may also be an multi-block copolymer or segmented copolymer of an addition polymerizable monomer mixture comprising propylene, 4-methyl-1-pentene, styrene, ethylene and/or one or more C4-20 alpha-olefins, cyclo-olefins or diolefins, to form a high molecular weight segmented copolymer. These copolymers contain two or more , preferably three or more segments or blocks differing in one or more chemical or physical properties as further disclosed in WO-A-2005090425, WO-A-090426 and WO-A-090427. These multi-block copolymers are commercially available from Dow Chemicals under the trade name Infuse®.

The film according to the present invention may optionally comprise an ethylene polymer chosen from an ethylene homo-or copolymer. Examples of ethylene homopolymers are linear low-density polyethylene (LLDPE), low-density polyethylene (LDPE), very low-density polyethylene (VLDPE) or high-density polyethylene (HDPE). Examples of ethylene copolymers are ethylene-vinyl acetate or ethylene/alpha-olefin copolymers. Preferably ethylene/alpha-olefin copolymers are optionally present in the film according to the present invention.

The ethylene/alpha-olefin copolymers for example refer to a class of ethylene based copolymers with a density of less than about 0.93 g/cm$^3$ at a molecular weight (Mw) greater than about 20,000. The ethylene/alpha-olefin copolymers preferably have densities from 0.86 to 0.92 g/cm$^3$. More preferably the ethylene/alpha-olefin copolymers have densities from 0.88 to 0.91 g/cm$^3$.

The ethylene/alpha-olefin copolymers for example comprise from 95 to 67 parts by weight ethylene and from 5 to 37 parts by weight of an alpha-olefin having from 3 to 8 carbon atoms. Preferably the ethylene/alpha-olefin copolymer comprise from 92 to 65 parts by weight ethylene and from 8 to 35 parts by weight of an alpha-olefin having from 3 to 8 carbon atoms. More preferable the ethylene/alpha-olefin, copolymers comprise from 90 to 65 parts by weight ethylene and from 10 to 35 of an alpha-olefin having from 3 to 8 carbon atoms. Examples of alpha-olefins having 3 to 8 carbon atoms are propene, 1-butene, 1-pentene, 1-hexene, and 1-octene. Preferably 1-butene or 1-octene is used as alpha-olefin. Commercially available copolymers are for example EXACT™ or ENGAGE™.

Examples of ethylene/alpha-olefin copolymers include ethylene/1-butene, ethylene/1-pentene, ethylene/1-hexene, ethylene/1-octene, and ethylene/2-norbornene. The ethylene alpha-olefin copolymers may have a narrow molecular weight distribution for example from 1.5 to 3, preferably from 1.8 to 3.0 and more preferably from 1.9 to 2.8. The narrow molecular weight distribution can be achieved by use of a polymerisation system whereby a_single site catalyst is used, including for example a metallocene catalyst.

The ethylene/alpha-olefin copolymers of the present invention for example have a peak melting temperature of less than 120°C. More preferably a peak melting temperature between 55-100°C.

The composition comprising the dynamically vulcanised thermoplastic elastomer, the polypropylene based polyolefine composition and optionally the ethylene polymer can be prepared by melt mixing and kneading the dynamically vulcanised thermoplastic elastomer, the polypropylene based polyolefine composition and optionally the ethylene polymer. The composition may also be prepared by preparing the dynamically vulcanised thermoplastic elastomer and adding the polypropylene based polyolefine composition and optionally the ethylene polymer before, during or after the vulcanisation.

The composition in the film according to the present invention may contain customary additives. Examples of such additives are reinforcing and non-reinforcing fillers, plasticizers, antioxidants, stabilizers, oil, antistatic agents, waxes, foaming agents, pigments, flame retardants, antiblocking agents and other known agents and are described in the Rubber World Magazine Blue Book, and in Gaether et al., Plastics Additives Handbook (Hanser 1990). Examples of suitable fillers are calcium carbonate, clay, silica, talc, titanium dioxide, and carbon.

Examples suitable oils are paraffinic oil, naphthenic oil, aromatic oil obtained from petroleum fractions. As paraffinic oil for example Sunpar™ oil may be used. Also highly hydrogenated oil in which the concentration of aromatic compounds is preferably less than 4 wt.% and the concentration of polar compounds is less than 0.3 wt.% may be used. An example of such oil is PennzUltra™ 1199, supplied by Pennzoil in the United States of America. The oil/rubber ratio in the thermoplastic elastomer is for example between 0.5-3, preferably between 1-2.5, more preferably between 1.6-2.0.

Examples of antiblocking agents are natural silica, fluoropolymers, silicon oil, stearates for example zinc stearate or calcium stearate or fatty acid amides for example kemamide™.

Another additive that can optionally be added is a Lewis base such as for instance a metal oxide, a metal hydroxide, a metal carbonate or hydrotalcite.

The additives can optionally be added during the preparation of vulcanised thermoplastic elastomer or during the preparation of the composition comprising the vulcanised thermoplastic elastomer, the polypropylene based polyolefin composition and optionally the ethylene polymer.

The quantity of additive to be added is known to one skilled in the art. Preferably the quantity of additives is chosen in that way that it does not impair the properties of the film.

The films according to the present invention may be processed by a conventional method for example blown or cast film processes.

Films for example include films in mono-layer or multi-layer constructions formed by co extrusion, by lamination or by extrusion coating. The composition comprising the vulcanised thermoplastic elastomer, the polypropylene based polyolefin composition and optionally the ethylene polymer is preferably extruded in a molten state through a flat die and then cooled to form sheets or cast films. Alternatively, the composition may be extruded in a molten state through an annular die and then blown and cooled to form a tubular film. The tubular film may be axially slit and unfolded to form a flat film. The film of the invention may be unoriented, uniaxially oriented or biaxially oriented. The film of the present invention is for example a single layer film or part of a multi-layer films. The films according to the present invention for example have a thickness between 5-500 micrometer. Preferably, the films have a thickness between 5-300 micrometer. More preferably the films have a thickness between 5-200 micrometer. Most preferably the films have a thickness between 5-100 micrometer.

The films according to the present invention for example comprise from 30-95 parts by weight of the vulcanised thermoplastic elastomer and 5-70 parts by weight of the polypropylene based polyolefin composition wherein said parts by weight are based upon 100 parts by weight of the total composition. Preferably, the films comprise from 40-80 parts by weight of the vulcanised thermoplastic elastomer and 20-60 parts by weight of the polypropylene based polyolefin composition wherein said parts by weight are based upon 100 parts by weight of the total composition. Even more preferably the films comprise from 50-70 parts by weight of the vulcanised thermoplastic elastomer and 30-50 parts by weight of the polypropylene based polyolefin composition wherein said parts by weight are based upon 100 parts by weight of the total composition.

Optionally from 0-50 parts by weight of ethylene polymer is present based on the total weight of the composition. Preferably 1-30 parts by weight of ethylene polymer is present based on the total weight of the composition. In case that the film according to the present invention also comprises an ethylene polymer, the composition for example comprises from 30-90 parts by weight of the vulcanised thermoplastic elastomer, from 5-65 parts of the polypropylene based polyolefin composition and from 5-50 parts by weight of ethylene polymer wherein said parts by weight are based upon 100 parts by weight of the total composition. Preferably, the films comprise from 40-80 parts by weight of the vulcanised thermoplastic elastomer, from 5-30 parts by weight of the polypropylene based polyolefin composition composition and from 5-30 parts by weight of ethylene polymer wherein said parts by weight are based upon 100 parts by weight of the total composition. Even more preferably the films comprise from 50-70 parts by weight of the vulcanised thermoplastic elastomer, from 5-30 parts by weight of the polypropylene based polyolefin composition and from 5-30 parts by weight of ethylene polymer wherein said parts by weight are based upon 100 parts by weight of the total composition.

The present invention further relates to a mono or multi layer construction comprising the film according to the present invention. The multi-layer construction may comprise one or more layers formed from the films according to the present invention.

A multi-layer construction may be formed by methods well known in the art. If all layers are polymers, the polymers may be co-extruded through a coextrusion feedblock and die assembly to yield a film with two or more layers adhered together but differing in composition. A multi-layer construction may also be formed by extrusion coating whereby a substrate material is contacted with the hot molten polymer as the polymer exits the die.

Multi-layer constructions may also be formed by combining two or more single layer films prepared as described above. The layers so formed may be adhered together with an adhesive or by the application of heat and pressure. This method is commonly used for multi-layer constructions of which one layer is a non-woven layer. In the present invention the mono or multi-layer construction preferably comprises at least one non-woven layer. A nonwoven layer for example is a layer having a structure of individual fibers or filaments that are interlaid in a random pattern. Nonwoven layers have been formed in the past, as known to those of ordinary skill in the art, by a variety of processes, such as, for example, melt blowing, spun bonding, air-laying, wet-laying, dry-laying, dry staple and carded web processes. The non-woven layer preferably comprises fibers formed from a polyolefin more preferably PP, PE or ethylene or propylene copolymers for example ethylene-propylene copolymers or propylene-ethylene copolymers. The propylene-ethylene copolymers are for example produced by co polymerising from 0.5% to 20% by weight of ethylene in the backbone of a polypropylene. Preferably, the propylene-ethylene copolymer is a block copolymer produced by copolymerising the ethylene by block in the backbone of polypropylene. More preferably, the propylene-ethylene copolymer is a random copolymer produced by copolymerising the ethylene randomly in the backbone of polypropylene. Preferably, from 5% to 15% by weight of ethylene is present in the backbone of the polypropylene. The propylene-ethylene copolymers are preferably polymerised in the presence of a metallocene catalyst.

The mono or multi layer construction preferably comprises one or more layers which are micro perforated. More preferably the mono or multi layer construction comprises one or more layers which include a plurality of micro perforations. The micro perforations for example have a diameter between 100 microns to 1500 microns, more preferably between 250 to 1000 microns. The micro perforations are preferably substantially uniformly distributed in the surface of said layer to provide increased breath ability.

The present invention further relates to the use of the films or the mono-or multi-layer construction according to the present invention in packaging, automotive, clothing applications, hygienic or medical applications. Examples of hygienic or medical applications are diapers, bandages, gloves, surgical drapes, hospital linens, diaper waist bands, site panel composites, site tabs, surgical drapes, sterilization wrap, surgical gowns, wound tape, cover garments for example over-suits.

The invention will be elucidated by means of the following examples and comparative experiment without being limited thereto.

For determination of the Permanent Deformation a DSM method is used measuring the permanent deformation after 600% stretch. A sample is cut from an extruded film with dimension 10 x 2 cm (10 cm taken in extrusion direction). On this film sample 5 cm is marked and subsequently the marked area is stretched to 600% at room temperature. After keeping the sample for 10 seconds at 600% the sample is allowed to relax for 180 minutes at room temperature.

The permanent deformation is then calculated by the following formula:

$$((\text{Length after stretching and relaxation}) - 5cm) / 5cm) \times 100 = \text{perm. deformation [\%]}.$$

Example 1

A dynamically vulcanized thermoplastic elastomer with a hardness of 30 Shore A (Sarlink X6135 NAT) was blended with an elastomeric thermoplastic polypropylene with a high rubber content (Hifax 7334) and an ethylene/ butylene copolymer (Exact 8201) in a weight ratio of 60:20:20. For determining the mechanical blend properties at room and increased temperatures the blend was injection molded to test parts with dimensions as described in the specific ASTM test standard.

Furthermore, the blend was processed by blow film extrusion into an elastic film with a thickness of 85 micron. For determination of the elastic recovery and permanent deformation at high levels of stretching "DSM method Permanent Deformation after 600% stretch" was applied. Results are given in table I.

Example 2

A dynamically vulcanized thermoplastic elastomer with a hardness of 30 Shore A (Sarlink X6135 NAT) was blended with an elastomeric thermoplastic polypropylene with a high rubber content (Hifax 7334) in a weight ratio of 60: 40. For determining the mechanical blend properties at room and increased temperatures the blend was injection molded to test parts with dimensions as described in the specific ASTM test standard. Furthermore, the blend was processed by blow film extrusion into an elastic film with a thickness of 85 micron. For determination of the elastic recovery and permanent deformation at high levels of stretching "DSM method Permanent Deformation after 600% stretch" was applied. Results are given in table I.

Comparative Experiment A

A dynamically vulcanized thermoplastic elastomer with a hardness of 30 Shore A (Sarlink X6135 NAT) was blended with an ethylene/butylene copolymer (Exact 8201) in a weight ratio of 60:40. For determining the mechanical blend properties at room and increased temperatures the blend was injection molded to test parts with dimensions as described in the specific ASTM test standard.

Furthermore, the blend was processed by blow film extrusion into an elastic film with a thickness of 90 micron. For determination of the elastic recovery and permanent deformation at high levels of stretching "DSM method Permanent Deformation after 600% stretch" was applied. Results are given in table I.

Table I

| Properties | Method | Unit | Example 1 | Example 2 | Comp. Exp A |
|---|---|---|---|---|---|
| Hardness | ASTM D2240 | Shore A | 55 | 55 | 56 |
| Specific Gravity | ASTM D792 | g/cm3 | 0.88 | 0.89 | 0.88 |
| Tensile Strength | ASTM D412C | MPa | 10.1 | 6.2 | 12.9 |
| Elongation at break | ASTM D412C | % | 825 | 770 | 860 |
| | | | | | |
| E'-modulus - 20°C | ASTM D5026 | MPa | 7.90 | 7.70 | 8.10 |
| E'-modulus - 60°C | ASTM D5026 | MPa | 2.40 | 2.60 | 1.70 |
| E'-modulus - 100°C | ASTM D5026 | MPa | 1.40 | 1.50 | 0.04 |
| E'-modulus - 120°C | ASTM D5026 | MPa | 0.90 | 1.00 | 0.03 |
| Film Properties | | | | | |
| Thickness | | $\mu$m | 90 | 85 | 90 |
| Permanent Deformation after 600% stretch | | % | 49 | 38 | 61 |

As can be seen from the above results the films according to the present invention show a decreased permanent deformation. Moreover the films show a better temperature resistance because they have a significant E- modulus even at 100°C and 120°C whereas the prior art films have no sufficient E-modulus anymore at these high temperatures.

**Claims**

1. Film comprising a composition consisting of a vulcanized thermoplastic elastomer, a polypropylene based polyolefin composition and optionally an ethylene polymer chosen from an ethylene homopolymer or ethylene-alpha-olefin copolymer and optionally customary additives chosen from the group consisting of reinforcing and non-reinforcing fillers, plasticizers, antioxidants, stabilizers, oil, antistatic agents, waxes, foaming agents, pigments, flame retardants and antiblocking agents, wherein the polypropylene based polyolefin composition is selected from the group consisting of:

a) a polypropylene based polyolefin composition comprising from 20 to 50 parts by weight of polypropylene and 50 to 80 parts by weight of an elastomeric olefinic copolymer whereby the total parts by weight of the polypropylene based polyolefin composition is 100;

b) a random propylene copolymer, comprising 75-95 percent by weight repeat units from propylene and 5 to 25 percent by weight of repeat units from a linear or branched alpha-olefin other than propylene having 2 or from 4 to 20 carbon atoms;

c) multi-block copolymer or segmented copolymer of an addition polymerizable monomer mixture comprising propylene, 4-methyl-1-pentene, styrene, ethylene and/or one or more C4-C20 alpha-olefins, cyclo-olefins or diolefins, to form a high molecular weight segmented copolymer,

and wherein the vulcanized thermoplastic elastomer is a polyolefin based thermoplastic elastomer comprising a polyolefin and a EPDM rubber.

2. Film according to claim 1 wherein the rubber is dynamically vulcanised by the use of a peroxide curing agent.

3. Film according to any one of the claims 1-2 wherein the vulcanised thermoplastic elastomer has hardness below 80 Shore A as measured by ASTM D2240.

4. Film according to any one of the claims 1-3 comprising from 30-90 parts by weight of vulcanised thermoplastic elastomer, 5-65 parts by weight of the polypropylene based polyolefin composition and from 5-50 parts by weight of the ethylene polymer wherein said parts by weight are based upon 100 parts by weight of the total composition.

5. Film according to any one of the claims 1-3 comprising from 30-95 parts by weight of vulcanised thermoplastic elastomer, 5-70 parts by weight of the polypropylene based polyolefin composition wherein said parts by weight are based upon 100 parts by weight of the total composition.

6. Film according to claims 1-5 having a thickness from 5 to 500 micrometer

7. Film according to claims 1-6 having a thickness from 5 to 300 micrometer

8. Mono or multi-layer construction comprising a film according to any one of the claims 1-7.

9. Mono or multi-layer construction according to claim 8 **characterised in that** the multi-layer construction comprises at least a non-woven layer.

10. Mono or multi-layer construction according to any one of claims 8 or 9 **characterised in that** one or more layers are micro perforated.

11. Use of the film according to any one of the claims 1-7 or the mono-or multi construction according to any one of the claims 8-10 in packaging, automotive, clothing applications, hygienic or medical applications.

12. Use of the film according to any one of the claims 1-7 or the mono-or multi construction according to any one of the claims 8-10 in diapers, bandages, gloves, surgical drapes, hospital linens, diaper waist bands, site panel composites, site tabs, sterilization wrap, surgical gowns, wound tape, cover garments.

**Patentansprüche**

1. Folie, umfassend eine Zusammensetzung, die aus einem vulkanisierten Thermoplastiscben Elastomer, einer Polyolefinzusammensetzung auf Polypropylenbasis und gegebenenfalls einem Ethylenpolymer, das aus einem Ethylenhomopolymer oder Ethylen-$\alpha$-Olefin-Copolymer gewählt, wird, und gegebenenfalls üblichen Additiven, die aus der Gruppe gewählt werden, bestehend aus verstärkenden und nicht verstärkenden Füllstoffen, Weichmachern, Antioxidantien, Stabilisatoren, Öl, Antistatikmitteln, Wachsen, Schäumungsmitteln, Pigmenten, Flammschutzmitteln und Antiblockiermitteln, besteht, wobei die Polyolefinzusammensetzung auf Polypropylenbasis aus der Gruppe gewählt wird, die aus Folgendem besteht:

a) einer Polyolefinzusammenseteung auf Polypropylenbasis, umfassend 20 bis 50 Gewichtsteile Polypropylen und 50 bis 80 Gewichtsteile eines elastomeren olefinischen Copolymers, wobei die Gesamtgewichtsteile der polyolefinzusammensetzung auf Polypropylenbasis 100 beträgt;

b) einem statistischen Propylencopolymer, umfassend 75 - 95 Gew.-% Miederholungseinhelten von Propylen und 5 bis 25 Gew.-% Wiederholungseinheiten von einem von Propylen verschiedenen linearen oder verzweigten $\alpha$-Olefin mit 2 oder 4 bis 20 Kohlenstoffatomen;

c) Mehrfachblock-Copolymer oder segmentiertem Copolymer einer additionspolymerisierbaren Monomermischung, die Propylen, 4-Methyl-1-penten, Styrol, Ethylen und/oder ein oder mehrere $C_4$-$C_{20}$-$\alpha$-Olefine, Cycloolefine oder Diolefine umfasst, zur Bildung eines hochmolekulargewichtigen segmentierten Copolymers;

und wobei das vulkanisierte thermoplastische Elastomer ein thermoplastisches Elastomer auf Polyolefinbasis ist, welches ein Polyolefin und einen EPDM-Kautschuk umfasst.

2. Folie gemäß Anspruch 1, wobei der Kautschuk unter Verwendung eines Peroxid-Härtungsmittels dynamisch vulkanisiert ist.

3. Folie Gemäß einem beliebigen der Ansprüche 1 - 2, wobei das vulkanisierte thermoplastische Elastomer eine Härte von unterhalb 80 Shore A aufweist, wie durch ASTM D2240 gemessen.

4. Folie gemäß einem beliebigen der Ansprüche 1 - 3, umfassend 30 - 90 Gewichtsteile vulkanisiertes thermoplastisches Elastomer, 5 - 65 Gewichtsteile Polyolefinsusammensetzung auf Polypropylenbasis und 5 50 Gewichtsteile des Ethylenpolymers, wobei die Gewichtsteile auf 100 Gewichtsteile der Gesamt zusammensetzung bezogen sind.

5. Folie gemäß einem beliebigen der Ansprüche 1 - 3, umfassend 30 - 95 Gewichtsteille vulkanisiertes thermoplastisches Elastomer und 5 - 70 Gewichtsteile Polyolefinzusammensetzung auf Polypropylenbasis, wobei die Gewichtsteile auf 100 Gewichtsteile der Gesamtzusammensetzung bezogen sind.

6. Folie gemäß den Ansprüchen 1 - 5 mit einer Dicke von 5 bis 500 Mikrometer.

7. Folie gemäß den Ansprüchen 1 - 6 mit einer Dicke von 5 bis 300 Mikrometer.

8. Ein- oder mehrschichtige Konstruktion, umfassend eine Folie gemaß einem beliebigen der Ansprüche 1 - 7.

9. Ein- oder mehrschichtige Konstruktion gemäß Anspruch 8, **dadurch gekennzeichnet, dass** die mehrschichtige Konstruktion mindestens eine Nonwoven-Schicht umfasst.

10. Ein- oder mehrschichtige Konstruktion gemäß einem beliebigen der Ansprüche 8 oder 9, **dadurch gekennzeichnet, dass** eine oder mehrere Schichten mikroperforiert sind.

11. Verwendung der Folie gemäß einem beliebigen der Ansprüche 1 - 7 oder der ein- oder mehrschichtigen Konstruktion gemäß einem beliebigen der Ansprüche 8 - 10 bei Verpackungs-, Kraftfahrzeug-, Bekleidungsanwendungen, Hygiene- oder medizinischen Anwendungen.

12. Verwendung der Folie gemäß einem beliebigen der Anspruche 1 - 7 oder der ein- oder mehrschichtigen Konstruktion gemäß einem beliebigen der Ansprüche 8 - 10 in Windeln, Verbänden, Handschuhen, chirurgischen Abdecktüchern, Krankenhaus (bett-) wäsche, Taillenbändern für Windeln, Side-Panel-Kompositen, Side-Tabs, Sterilisationshüllen, Operationskitteln, Wund-Tapes und Abdeckkleidungsstücken.

## Revendications

1. Film comprenant une composition constituée d'un élastomère thermoplastique vulcanisé, d'une composition de polyoléfine à base de polypropylène et éventuellement d'un polymère d'éthylène choisi parmi un homopolymère d'éthylène ou un copolymère éthylène-alpha-oléfine et éventuellement d'additifs courants choisis dans le groupe constitué par les charges de renfort et de non-renfort, les plastifiants, les antioxydants, les stabilisants, une huile, les agents antistatiques, les cires, les agents moussants, les pigments, les ignifugeants et les agents antiblocking, dans lequel la composition de polyoléfine à base de polypropylène est choisie dans le groupe constitué par :

a) une composition de polyoléfine à base de polypropylène comprenant de 20 à 50 parties en poids de polypropylène et 50 à 80 parties en poids d'un copolymère oléfinique élastomère dans laquelle le nombre total de parties en poids de la composition de polyoléfine à base de polypropylène est égal à 100;

b) un copolymère de propylène statistique, comprenant 75-95 pour cent en poids de motifs récurrents provenant du propylène et 5 à 25 pour cent en poids de motifs récurrents provenant d'une alpha-olefine linéaire ou ramifiée autre que le propylène, comportant 2 ou de 4 à 20 atomes de carbone:

c) un copolymère à plusieurs blocs ou un copolymère segmenté d'un mélange de monomères polymérisables par addition comprenant, du propylène, du 4-méthyl-1-pentène, du styrène, de l'éthylène et/ou une ou plusieurs alpha-oléfines, cyclo-oléfines ou dioléfines en $C_4$-$C_{20}$; pour former un copolymère segmenté de masse moléculaire élevée,

et dans lequel l'élastomère thermoplastique vulcanisé est un élastomère thermoplastique à base de polyoléfine comprenant une polyoléfine et un caoutchouc EPDM.

2. Film selon la revendication 1 dans lequel le caoutchouc est vulcanisé par un procédé dynamique à l'aide d'un agent durcisseur de type peroxyde.

3. Film selon l'une quelconque des revendications 1-2 dans lequel l'élastomère thermoplastique vulcanisé a une dureté inférieure à 80 Shore A, mesurée par ASTM

4. Film selon l'une quelconque des revendications 1-3 comprenant 30-90 parties en poids d'élastomère thermoplastique vulcanisé, 5-65 parties en poids de la composition de polyoléfine a base de polypropylène et 5-50 parties en poids du polymère d'éthylène, dans lequel lesdites parties en poids sont rapportées à 100 parties en poids de la composition totale.

5. Film selon, l'une quelconque des revendications 1-3 comprenant 30-35 parties en poids d'élastomère thermoplastique vulcanise, 5-70 parties en poids de la composition de polyoléfine à base de polypropylène, dans lequel lesdites parties en poids sont rapportées à 100 parties en poids de la composition totale.

6. Film selon les revendications 1-5 ayant une épaisseur de 5 à 500 micromètres.

7. Film selon les revendications 1-6 ayant une épaisseur de 5 à 300 micromètres.

8. Construction mono ou multicouche comprenant un film selon l'une quelconque des revendications 1-7.

9. Construction mono ou multicouche selon la revendication 8 **caractérisée en ce que** la construction multicouche comprend au moins une couche de non-tissé.

10. Construction mono ou multicouche selon l'une quelconque ces revendications 8 ou 9 **caractérisée en ce qu'**une ou plusieurs couches sont microperforées.

11. Utilisation du film selon l'une quelconque des revendications 1-7 ou de la construction mono ou multicouche selon l'une quelconque des revendications 8-10 dans les emballages, les automobiles, les applications d'habillement, les applications hygiéniques ou médicales.

12. Utilisation du film selon l'une quelconque des revendications 1-7 ou de la construction mono ou multicouche selon l'une quelconque des revendications 8-10 dans des couches, des bandages, des gants, des champs opératoires, du linge hospitalier, des ceintures pour couches, des composites pour panneaux de chantier, des jupes de chantier, des enveloppes de stérilisation, des blouses chirurgicales, des pansements, des vêtements de protection.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005023909 A
- US 5100947 A
- EP 395083 A
- EP 553805 A
- EP 553806 A
- WO 9635751 A
- EP 969043 A
- WO 2005090425 A
- WO 090426 A
- WO 090427 A